# EUROPEAN PATENT APPLICATION

(11) **EP 1 811 367 A2**
(43) Date of publication of application: **25.07.2007**
(21) Application number: 06125576.6
(22) Date of filing: 07.12.2006
(51) Int. Cl.: G06F 3/12

(54) **USB device and method of controlling storage medium included in the same**

(30) Priority: 02.01.2006 KR 20060000157
(71) Applicant: Samsung Electronics Co., Ltd., Suwon-si Gyeonggi-do (KR)
(72) Inventor: Park, Jie Hwan, Taean-eup, Hwaseong-si, Gyeonggi-do (KR)
(74) Representative: Read, Matthew Charles

(57) **Abstract**

An image forming apparatus connected to a host using a USB and a method of controlling a storage medium included in the same are provided. A control signal with respect to the storage unit from a USB host is received, and the storage unit is controlled in response to the control signal by outputting the control signal to the storage unit through a USB hub connected to the storage unit using a device class, such as Mass Storage Class (MSC). Accordingly, when a storage medium, such as a hard disk drive (HDD), included in an image forming apparatus is controlled, decrease of system performance due to storage medium control by a main processor can be reduced by allowing not only the main processor but also a USB host to directly control the storage medium using a USB hub and device class such as Mass Storage Class.

## Description

The present invention relates to a method of controlling a universal serial bus (USB) device connected to a host and a storage medium included in or connected to the USB device. More particularly, the present invention relates to an image forming apparatus having a USB interface, the image forming apparatus including or having connected thereto a storage medium that can be directly controlled by a host via the USB interface without using a main processor of the image forming apparatus, and a method of controlling the storage medium.

Generally, image forming apparatuses convert a document, which a user wants to edit and print via an application program, into encoded data and print the encoded data onto paper in a user-readable pattern.

Image forming apparatuses have recently become available that can directly connect to a memory card storing image files or a USB memory stick or have a high-capacity hard disk drive (HDD), and can print an image of an image file from the external storage medium or the HDD.

An image forming apparatus having a high-capacity HDD can receive an image file from a computer via a USB, store the received image file in the high-capacity HDD, and print the stored image file by reading it from the high-capacity HDD.

USB is a general-use interface for connecting a USB device to a USB host in order to transmit data therebetween. In a standard USB specification, USB devices are classified into storage devices, printing devices, human interface devices, and communication devices.

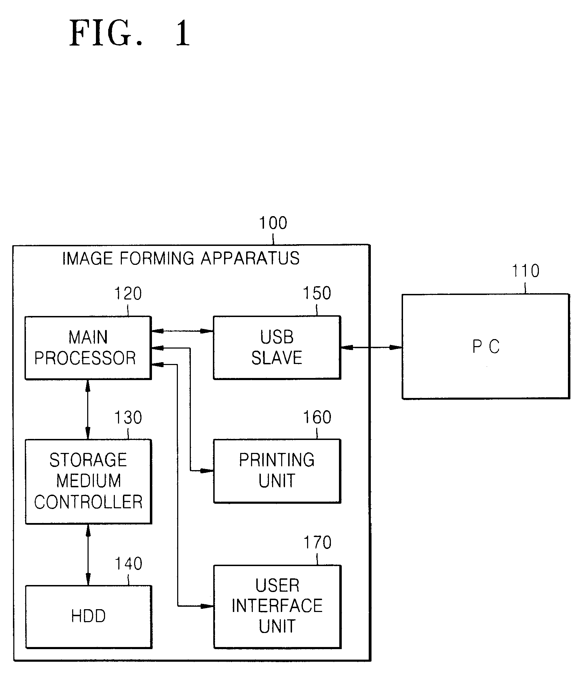

Figure 1 is a block diagram of a conventional image forming apparatus 100 having a USB interface. Referring to Figure 1, the image forming apparatus 100 includes a main processor 120, a storage medium controller 130, an HDD 140, a USB slave 150, a printing unit 160, and a user interface unit 170.

The USB slave 150 is connected to the main processor 120 using Print Class and transmits/receives data to/from a computer 110, which is a USB host. The storage medium controller 130 reads/writes data from/to the HDD 140 in response to a control signal input from the main processor 120. The main processor 120 controls the printing unit 160 to print image data input from the computer 110. The user interface unit 170 displays an image to be printed or allows a user to input a selection of an image to be printed.

As illustrated in Figure 1, since the HDD 140 can be controlled only by the main processor 120, the main processor 120 must control the HDD 140 even to perform simple tasks such as storing image data received from the computer 110 to the HDD 140.

When a storage medium, such as an HDD included in an image forming apparatus, is controlled using the conventional method described above, the operational efficiency of the main processor controlling general operation of the image forming apparatus is reduced, thereby decreasing the performance of the entire system.

Exemplary embodiments of the present invention provide an image forming apparatus having a USB interface, the image forming apparatus including or having connected thereto a storage medium that can be directly controlled by a host via the USB interface without using a main processor of the image forming apparatus, and a method of controlling the storage medium.

Exemplary embodiments of the present invention provide a method of controlling a storage unit included in a USB device. The method comprises receiving a control signal with respect to the storage unit from a USB host, and controlling the storage unit in response to the control signal by outputting the control signal to the storage unit through a USB hub connected to the storage unit using Mass Storage Class (MSC).

The USB device can be an image forming apparatus, and controlling the storage unit can comprise reading at least one of storage unit directory information and information on stored data, and transmitting the data stored in the storage unit to the USB host.
In an exemplary implementation, the controlling the storage unit can comprise reading directory information of the storage unit, and receiving data from the USB host and storing the received data in the storage unit.

In an exemplary implementation, the storage unit can comprise, for example, at least one of a hard disk drive (HDD) and a flash memory, and the USB hub can output the control signal received from the USB host to at least one of a main processor of the USB device and the storage unit.

In an exemplary implementation, the USB hub can be connected to the main processor using Print Class.

In an exemplary implementation, when the main processor is busy, controlling of the storage unit so that data received from the USB host may be stored in the storage unit.

In an exemplary implementation, the method may further comprise reading data stored in the storage unit and performing a printing job or a fax transmission using the data.

Exemplary embodiments of the present invention provide a universal serial bus (USB) device comprising a main processor for controlling general operation of the USB device, a storage unit for storing data, a storage medium controller for controlling the storage unit in response to a control signal input from the main processor, a signal converter for controlling the storage unit by converting a control signal input from a USB host, a USB slave for communicating data with the USB host, and a USB hub for outputting data received from the USB host to at least one of the main processor and the signal converter and outputting data received from the at least one of the main processor and the signal converter to the USB slave.

In an exemplary implementation, the USB device can be an image forming apparatus, and the USB hub can output data to the main processor using a device class, such as Print Class.

In an exemplary implementation, the USB hub can communicate data with the signal converter using a device class, such as Mass Storage Class (MSC), and the storage unit can comprise at least one of a hard disk drive (HDD) and a flash memory. The storage medium controller and the signal converter can share a bus connected to the storage unit.

Exemplary embodiments of the present invention provide a computer readable medium storing a computer readable program for executing the method of controlling a storage unit included in a USB device.

The above and other features and advantages of the present invention will become more apparent from the following detailed description of certain exemplary embodiments thereof when taken in conjunction with the accompanying drawings, in which:
Figure 1 is a block diagram of a conventional image forming apparatus having a USB interface;
Figure 2 is a block diagram of an image forming apparatus, a storage medium of which can be directly controlled by a host using a USB interface, according to an exemplary embodiment of the present invention;
Figure 3 is a flowchart illustrating a method of controlling a storage unit included in a USB device according to an exemplary embodiment of the present invention; and
Figure 4 is a flowchart illustrating a method of controlling a hard disk drive (HDD) included in an image forming apparatus according to an exemplary embodiment of the present invention.

The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope of the claimed invention.

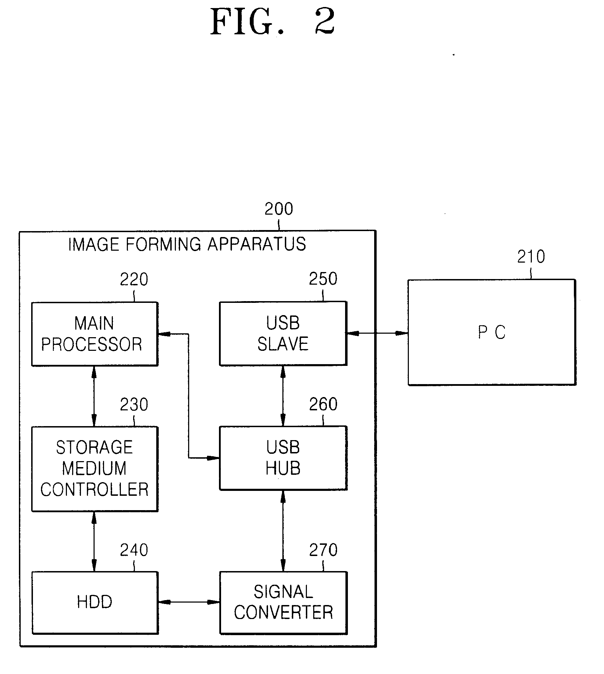

Figure 2 is a block diagram of an image forming apparatus 200, a storage medium of which can be directly controlled by a host via a USB interface, according to an exemplary embodiment of the present invention. Referring to Figure 2, the image forming apparatus 200 includes a main processor 220, a storage medium controller 230, an HDD 240, a USB slave 250, a USB hub 260, and a signal converter 270.

In addition to the components illustrated in Figure 2, the image forming apparatus 200 further includes (not shown) a printing unit for performing a printing job, a display unit for displaying an image for a user, and a user interface unit for allowing the user to input specific selection.

When the image forming apparatus 200 is connected to a computer 210, which is a USB host, via the USB, the computer 210 enumerates the image forming apparatus 200 by receiving a descriptor of the image forming apparatus 200. The descriptor includes information on a USB device, such as class of the USB device, required for the computer 210 to enumerate the image forming apparatus 200. The computer 210 determines a device class for an operation of the image forming apparatus 200 based on the class of the USB device included in the descriptor. The image forming apparatus 200 can support USB device classes such as, for example, Print Class and Mass Storage Class (MSC).

The USB slave 250 communicates data with the computer 210 connected thereto via the USB. In an exemplary implementation, the USB hub 260 is connected to the main processor 220 using Print Class and to the signal converter 270 using MSC. The USB hub 260 analyzes data received from the computer 210 via the USB slave 250 and outputs the received data to the main processor 220 using Print Class or to the signal converter 270 using MSC.

In an exemplary implementation, the main processor 220 communicates data with the computer 210 via the USB hub 260 using Print Class and generates a control signal for controlling the HDD 240 such as, for example, reading/writing data. The storage medium controller 230 controls the HDD 240 by receiving the control signal generated from the main processor 220 and converting the received control signal to a control signal suitable for the HDD 240.

The signal converter 270 shares the bus of the HDD 240 with the storage medium controller 230. In an exemplary implementation, the bus is an integrated drive electronics (IDE) bus. The signal converter 270 receives an HDD control signal from or communicates data with the computer 210 via the USB hub 260 using MSC. That is, the signal converter 270 stores the data received from the computer 210 in the HDD 240 by converting the control signal received from the computer 210 to a control signal suitable for the HDD 240. The signal converter 270 can also read data stored in the HDD 240.

The computer 210 can directly control the HDD 240 using MSC as if it is a portable storage device. That is, the computer 210 can store data in the HDD 240 or read data stored in the HDD 240 without using the main processor 220 by directly recognizing the HDD 240.

A method of printing an image using an image forming apparatus, a storage medium of which can be directly controlled by a host, according to an exemplary embodiment of the present invention will now be described.

If a printing job of specific image data is requested by the computer 210 while the main processor 220 is performing a certain task, the image data is stored in a certain location of a disk of the HDD 240 using MSC. When the main processor 220 completes the certain task, the main processor 220 reads the stored image data via the storage medium controller 230 and performs a printing job of the read image data.

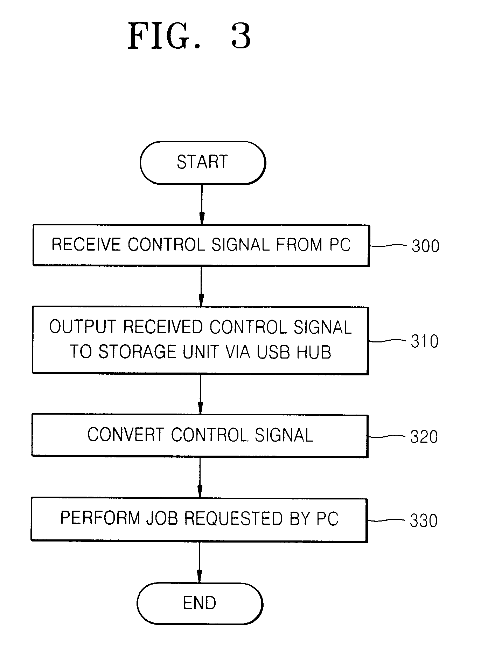

Figure 3 is a flowchart illustrating a method of controlling a storage unit included in a USB device according to an exemplary embodiment of the present invention. The method illustrated in Figure 3 will be described in conjunction with the image forming apparatus 200 (USB device) illustrated in the exemplary embodiment of Figure 2.

When a user requests a specific task using the computer 210 with regard to the HDD 240 of the image forming apparatus 200, the computer 210 generates a control signal corresponding to the task requested by the user and transmits the generated control signal to the image forming apparatus 200, step 300. The USB slave 250 then receives the control signal.

The USB slave 250 outputs the received control signal to the USB hub 260, step 310, and the USB hub 260 outputs the control signal to the signal converter 270 using MSC. The signal converter 270 then converts the control signal to a control signal suitable for a signal input format of the HDD 240, step 320, and outputs the converted control signal to the HDD 240. The task requested by the user is performed by the HDD 240 in response to the converted control signal, step 330.

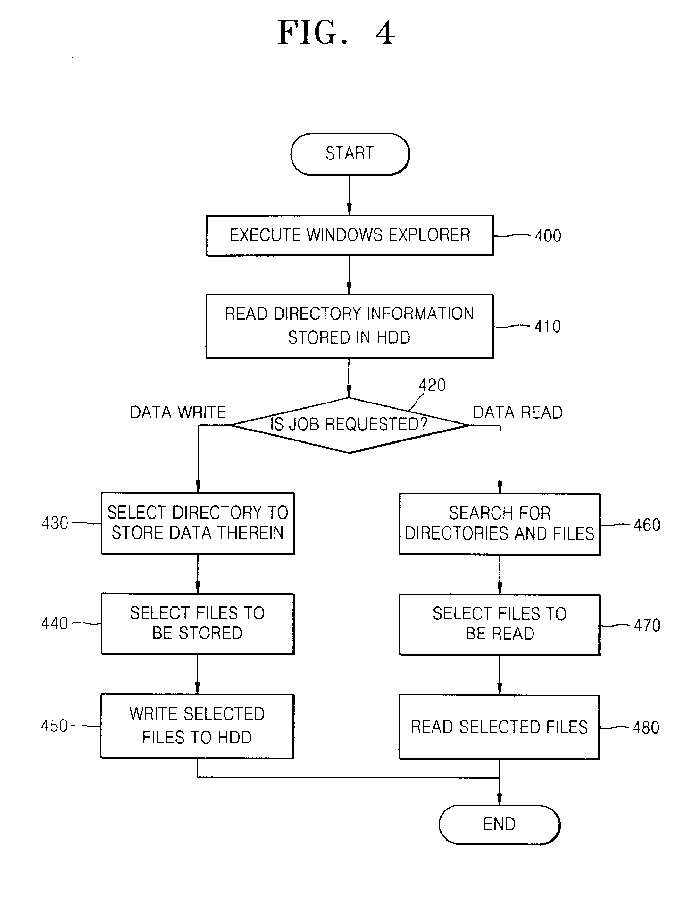

Figure 4 is a flowchart illustrating a method of controlling an HDD included in an image forming apparatus according to an exemplary embodiment of the present invention. The method illustrated in

Figure 4 will be described in conjunction with the image forming apparatus 200 illustrated in the exemplary embodiment of Figure 2.

When a user uses an application program, for example, Windows Explorer, to display drive information and stored file information of a storage medium connected to or included in the computer 210, step 400, the computer 210 transmits a signal to the image forming apparatus 200 requesting directory information of the HDD 240 and information on files stored in the HDD 240.

The USB slave 250 outputs the received information request signal to the USB hub 260, and the USB hub 260 outputs the information request signal to the signal converter 270 using a device class such as MSC. The signal converter 270 converts the information request signal according to a signal input format of the HDD 240 and outputs the converted information request signal to the HDD 240.

The USB hub 260 receives directory and file information, which is output from the HDD 240 in response to the converted information request signal using a device class, such as MSC, and the USB slave 250 transmits the directory and file information to the computer 210, step 410.

The computer 210 displays the received directory and file information of the HDD 240 on the executed application program. In step 420 the task requested by user is determined, for example, whether the user requests storing of files from the computer 210 into the HDD 240 or storing of files from the HDD 240 into the computer 210 using the directory and file information of the HDD 240 displayed on the application program.

A case of the storing of files from the computer 210 into the HDD 240 of the image forming apparatus 200 by directly accessing the HDD 240 will now be described.

The user selects a directory of the HDD 240 to store the files therein using the application program of the computer 210, step 430. When the user selects the files to be stored into the HDD 240 among files stored in the computer 210 and requests the computer 210 to store the selected files in the HDD 240, the computer 210 transmits a control signal including information on the selected directory and the files to be stored to the image forming apparatus 200, step 440.

The USB hub 260 outputs the received control signal and files to the signal converter 270 using a device class, such as MSC, and the files are stored in the HDD 240 in response to a control signal converted by the signal converter 270, step 450. The main processor 220 can read data stored in the HDD 240, and perform a printing job of the read data or transmit the read data as fax data.

A case of the storing of files from the HDD 240 of the image forming apparatus 200 into the computer 210 will now be described.

The user searches for directories of the HDD 240 and stored files using the application program of the computer 210, step 460. When the user selects files to be stored in the computer 210 among the files found and a directory of the computer 210 to store the files therein, the computer 210 generates a control signal including information on the selected directory and information on the selected files and transmits the generated control signal to the image forming apparatus 200, step 470.

The USB hub 260 outputs the received control signal to the signal converter 270 using a device class, such as MSC, and the selected files stored in the selected directory of the HDD 240 are read in response to a control signal converted by the signal converter 270, step 480. The USB hub 260 transmits the files read to the computer 210 via the USB slave 250. The computer 210 stores the received files in the directory selected by the user.

Although exemplary embodiments of the present invention have been described with reference to an image forming apparatus, exemplary embodiments of the present invention can also be applied to other USB devices such as digital cameras and MP3 players.

Exemplary embodiments of the present invention can also be embodied as computer readable code on a computer readable medium. The computer readable medium can be any data storage device that can store data which can be thereafter read by a computer system. Examples of the computer readable medium include read-only memory (ROM), random-access memory (RAM), CD-ROM, magnetic tape, floppy disk, optical data storage devices, and carrier waves (such as data transmission through the Internet).

As described above, by using the method and apparatus for managing image files stored in an external storage medium according to exemplary embodiments of the present invention, a user can easily manage image files stored in the external storage medium via a user interface for copying all image files from the external storage medium into a built-in storage medium of an image forming apparatus when a connection with the external storage medium is sensed.

While the present invention has been particularly shown and described with reference to certain exemplary embodiments thereof, it will be understood by those of ordinary skill in the art that various changes in form and detail may be made therein without departing from the scope of the present invention as defined by the following claims.

## Claims

1. A method of controlling a storage unit connected to or included in a universal serial bus (USB) device, the method comprising:
receiving a control signal with respect to a storage unit from a USB host; and
controlling the storage unit in response to the control signal by outputting the control signal to the storage unit through a USB hub connected to the storage unit using a device class.

2. The method of claim 1, wherein the USB device comprises an image forming apparatus.

3. The method of claim 1 or 2, wherein the controlling of the storage unit comprises:
reading at least one of storage unit directory information and information on stored data; and
transmitting the data stored in the storage unit to the USB host.

4. The method of any preceding claim, wherein the controlling of the storage unit comprises:
reading directory information of the storage unit; and
receiving data from the USB host and storing the received data in the storage unit.

5. The method of any preceding claim, wherein the controlling of the storage unit comprises controlling at least one of a hard disk drive (HDD) and a flash memory.

6. The method of any preceding claim, wherein the USB hub outputs the control signal received from the USB host to at least one of a main processor of the USB device and the storage unit.

7. The method of claim 6, wherein the USB hub is connected to the main processor using a device class.

8. The method of claim 6, wherein the controlling of the storage unit comprises, when the main processor is busy, controlling the storage unit to store data received from the USB host in the storage unit.

9. The method of any preceding claim, further comprising:
reading data stored in the storage unit; and
performing at least one of a printing job and a fax transmission using the data.

10. A universal serial bus (USB) device connected to a USB host, the USB device comprising:
a main processor (220) for controlling operation of a USB device;
a storage unit (240) for storing data;
a storage medium controller (230) for controlling the storage unit in response to a control signal input from the main processor;
a signal converter (270) for controlling the storage unit by converting a control signal input from a USB host;
a USB slave (250) for communicating data with the USB host; and
a USB hub (260) for outputting data received from the USB host to at least one of the main processor and the signal converter and outputting data received from at least one of the main processor and the signal converter to the USB slave.

11. The USB device of claim 10, wherein the USB device comprises an image forming apparatus.

12. The USB device of claim 10 or 11, wherein the USB hub outputs data to the main processor using a device class.

13. The USB device of claim 10, 11 or 12 wherein the USB hub communicates data with the signal converter using a device class.

14. The USB device of any one of claims 10 to 13, wherein the storage unit comprises at least one of a hard disk drive (HDD) and a flash memory.

15. The USB device of any one of claims 10 to 14, wherein the storage medium controller and the signal converter share a bus connected to the storage unit.

16. A computer readable medium storing a computer readable program for executing the method of any one of claims 1 to 9.

17. The method of any one claim 1 to 9, wherein the device class comprises Mass Storage Class (MSC).

18. The method of claim 7, wherein the device class comprises Print Class.

19. The USB device of claim 12, wherein the device class comprises Print Class.

20. The USB device of claim 13, wherein the device class comprises Mass Storage Class (MSC).
